(19) Europäisches Patentamt
European Patent Office
Office européen des brevets

(11) EP 4 265 122 A1

(12) # EUROPEAN PATENT APPLICATION
published in accordance with Art. 153(4) EPC

(43) Date of publication:
**25.10.2023 Bulletin 2023/43**

(21) Application number: **21906650.3**

(22) Date of filing: **15.12.2021**

(51) International Patent Classification (IPC):
***A23K 20/184*** *(2016.01)* ***A23K 50/30*** *(2016.01)*

(52) Cooperative Patent Classification (CPC):
**A23K 20/184; A23K 50/30**

(86) International application number:
**PCT/JP2021/046242**

(87) International publication number:
**WO 2022/131288 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.12.2020 JP 2020208576**

(71) Applicant: **SUMITOMO CHEMICAL COMPANY, LIMITED**
**Tokyo 103-6020 (JP)**

(72) Inventors:
- **TONOUE, Tsuyoshi**
  **Tokyo 103-6020 (JP)**
- **KOJO, Hiroshi**
  **Tokyo 103-6020 (JP)**
- **ANRYU, Makoto**
  **Osaka-shi, Osaka 541-8550 (JP)**

(74) Representative: **Vossius & Partner Patentanwälte Rechtsanwälte mbB**
**Siebertstraße 3**
**81675 München (DE)**

(54) **ABSCISIC ACID-MIXED PIG FEED**

(57) The present invention provides a pig feed which can increase a productivity of pork and can reduce a cold stress or a heat stress. The present invention provides also a pig feed comprising abscisic acid and/or its salt; a method for breeding a pig which comprises taking the pig feed to a pig; a method for preventing and/or improving the reduction of a productivity in a pig due to a cold and/or a heat; a method for increasing a feed efficiency in a pig; and a method for improving antioxidant potency of a pig by increasing a reduced glutathione in a body of a pig.

EP 4 265 122 A1

## Description

### TECHNICAL FIELD

This application claims priority to and the benefit of Japanese Patent Application No. 2020-208576 filed December 16, 2020, the entire contents of which are incorporated herein by reference.

The present invention relates to a pig feed comprising abscisic acid (hereinafter also referred to as "ABA").

### BACKGROUND ART

The world's leading sources of meat are cow, pig, chicken and sheep (including goat). Among them, the amount of production of pork is approximately equivalent to the amount of production of poultry, and is far behind the amounts of production of beef and mutton, and there is also a statistic data that about three out of ten of meat is pork. The demand for pork as an edible meat is extremely high.

A pig to be bred is mainly used as an edible meat. Accordingly, in pig farms, a goal is to produce a large number of offspring pigs and fatten them so that they grow quickly. The sow that gives birth to an offspring pig (breeding sow) is introduced at age of about 6 months and a body weight of about 100 kg when it begins to show estrus (a time when it is easy to become pregnant), and then starts a mating 2 months later (8 months old) and a body weight of about 130 kg. The gestation period is about 114 days, and a mother pig gives birth to about 10 offspring pigs in one calving. After the calving, the mother pig gives a breast-feeding to the baby pigs for about 3 to 4 weeks (21 to 28 days), and approximately one week after weaning, the mother pig reaches an estrus again, and repeats mating, pregnancy and calving. In the case of a health pig, about 5 deliveries are made in 2 years, so on average, one mother pig can produce more than 20 offspring pigs in one year. The newborn baby pig have about 1.3 kg of body weight. The weaned young pigs are bred as a fattening pig so that they can be shipped at about 6 months (25 weeks) of age and 110 to 115 kg of a body weight through a pre-lactation period, a late lactation period (until about 21 weeks age), a weaning period (about 21 to 70 days age), a raising period (about 70 to 120 days age) and a fattening period (about 120 to 180 days age).

As for the feeding of pigs, 4 to 5 kinds of feeding (provisioning) are done according to each of the above-mentioned developmental stages, and fattening is then done. Newborn baby pigs are breastfed or artificially fed for about 20 days until they weight around 6 kg. During this period, the immunity and physical strength each which is necessary for growth are cultivated. Next, the young pigs are fed a digestible baby food and weaned from the mother pig. After weaning, the young pigs are transferred to a piggery for breeding, and raised by switching the feed taken to a feed for the weaning period for about 50 days until around 30 kg. After that, the young pigs are given with the feed for the growing season and then the feed for the fattening season, and is raised to a state where it can be shipped as a meat pig for a total of about 180 days after birthing.

As mentioned above, the demand for pork as an edible meat is extremely large, and the consumption of pork is thus expanding. Properties that are thought to be important in pig farming to increase pork productivity are a performance of meat production, a robustness, and a reproductive capacity. In order to improve these properties, various resources have been taken in pig farming, such as a crossing of breeds.

Among domestic animals, a pig is an animal with an extremely fast growth rate. For that reason, the breeding environment, including nutritional supply and sanitary requirements, has a great influence on the growth and physiology of pigs. The environment surrounding a pig includes a heat environment (thermal environment), a physical environment, a chemical environment, a biological environment, and a social environment, and in particular, the heat environment (thermal environment) has a large effect on a pig productivity. The heat environment is referred to as a cold environment and a hot environment. Particularly, because in the stage from the newborn to the young pig, the growth and health condition are greatly affected by the environmental temperature, so it is important to manage the pig carefully.

If it is too hot for a pig, a decrease in feed intake and an increase in respiratory rate are observed, and if it is too cold for a pig, behaviors such as an increase in feed intake, rigidity and tremor are observed. If the heat environment such as cold or hot environment is not adjusted, it becomes cold stress or heat stress for a pig. In a stressful environment, a pig may become depressed like humans. It is said that in modern factory pig farming, a pig is more prone to be sensitive to a stress and become depression than in the past. Depression can reduce feed efficiency and also may become a factor in tail galling. Like humans, the depression loses a body weight in some pigs and accumulates more subcutaneous fat in other pigs. A gastric ulcer is also a common disease of pigs, which may be observed especially in stressful environments. The pig gastric ulcers are so common disease that it has been reported that more than 90% of pigs shipped to slaughterhouses are observed to have symptoms of gastric ulcer. One of the main factors is the environmental temperature.

In particular, since a pig has almost degenerated sweat glands, it is important to prevent heat stress in the summer season. As a measure against heat stress in a pig, studies have been known to evaluate the antioxidant potency of red rice and purple-black rice as a pig feed (Non-patent document 1). Non-patent document 1 describes that the

oxidative stress of breeding pigs is reduced in a hot environment by utilizing the antioxidant potency of red rice and purple-black rice, and that the oxidative stress in a hot environment is reduced by feeding the breeding female pig.

Further, as a measure against heat stress of a pig, it has been known a study on the effects of mixed feeding of feed rice, barley, and residues in tea-making process, and the difference in their crushed particle size on the growth, carcass performance, and meat quality of fattening pigs in a hot environment (Non-patent document 2). This is related to the heat countermeasure technology of fattening pig which utilizes the nutritional characteristics of feed rice and barley and the functional characteristics of residues in tea-making process.

Abscisic acid (ABA) is a natural occurring plant hormone, which is a substance that is widely present in plants and carries out physiological activity and signal transduction between cells.

Abscisic acid is synthesized in cells when plants are exposed to environmental stresses such as dryness and low temperature, and plays a role in drying tolerance, growth suppression, seed dormancy and the like. Commercial formulations containing abscisic acid are used as a so-called plant growth regulator as improving stress tolerance at harvest and at planting time or around them, slowing the growth rate, and regulating the flowering period, etc. in agriculture and horticulture.

Abscisic acid or its' salts or esters is also used in the treatment of vitamin deficiency (Patent document 1), the treatment of diabetes and immune system diseases (Patent document 2), and the treatment of neurodegenerative diseases (Patent document 3). ABA and its biosynthetic precursor xanthoxin are reported to be inhibitors of a human Bitter Taste G-protein Coupled Receptor (Non-patent document 3). ABA metabolite phaseic acid has been shown to be neuroprotective during ischemic brain injury (Non-patent document 4).

As an example of using abscisic acid for livestock and fish, Patent documents 4 to 8 are included. Patent document 4 discloses that, by providing a feed comprising as an effective component abscisic acid, the feed efficiency, the weight gain and the muscle gain of livestock and fish can be improved, a raising period can be shortened, and a dose of antibiotics can be reduced or antibiotics are no longer used.

Patent document 5 discloses a composition comprising abscisic acid, a salt thereof, a derivative thereof and an analogue thereof, and a method of improving post-natal weight gain of animal offspring by using said composition.

Patent document 6 discloses a composition comprising abscisic acid, a salt thereof, a derivative thereof and an analogue thereof, and a method of increasing the feed efficiency which comprises dosing abscisic acid, a salt thereof, and a derivative thereof to livestock or fish.

Patent document 7 discloses a composition comprising abscisic acid, a salt thereof, a derivative thereof and an analogue thereof, and a method of improving the productivity of animal reproduction which comprises dosing abscisic acid to a pregnant animal.

Patent document 8 discloses a composition comprising abscisic acid, a salt thereof, a derivative thereof and an analogue thereof, and a method of reducing mortality which comprises dosing abscisic acid, a salt thereof and a derivative thereof to chicken.

CITATION LIST

PATENT DOCUMENT

Patent Document 1: USP 3958025
Patent Document 2: USP 7741367
Patent Document 3: USP 7718699
Patent Document 4: WO 2012/037561
Patent Document 5: USP 9591867
Patent Document 6: US patent publication No. 2015/0250209
Patent Document 7: USP 10238613
Patent Document 8: US patent publication No. 2020/0030269 Non-PATENT Document

Non-Patent Document 1: The Japanese journal of swine science, 49(3), 109-116, 2012.9
Non-Patent Document 2: The Japanese journal of swine science, 49(1), 1-13, 2012.3
Non-Patent Document 3: Pydi, et al., Biochemistry, 2015, 54, 2622-2631.
Non-Patent Document 4: Hou, et al., The Journal of Biological Chemistry, 2016, 291, 27007-27022.

SUMMARY OF THE INVENTION

(PROBLEMS TO BE SOLVED BY INVENTION)

As described above, the demand for pork as an edible meat is extremely large, and the consumption of pork is expanding. Accordingly, the present invention is to provide a feed for improving a productivity of a pork. Also a cold stress or a heat stress causes various harmful effects such as a decrease in productivity and a decrease in feed intake. Accordingly, the purpose of the present invention is to provide a feed for reducing a cold stress or a heat stress.

(MEANS TO SOLVE PROBLEMS)

The present inventors have intensively studied to develop a feed which can increase a productivity of a pork and reduce a cold stress or a heat stress, and as a result, found that mixing a pig feed with a predetermined amount of abscisic acid/or its salts can achieve the above described purposes, and then have completed the present invention.
That is, the present invention relates to a pig feed comprising abscisic acid and/or its salt, a method for breeding a pig by using the pig feed addition composition or the pig feed, a method for preventing and/or improving the reduction of a productivity due to a cold and/or a heat in a pig, and a method for increasing a feed efficiency of a pig.
Accordingly, the present invention includes the followings.

[1] A pig feed comprising 0.1 to 10 ppm of abscisic acid and/or a salt thereof in the feed.
[2] The pig feed of [1] which is for a reduction of a cold stress and/or a heat stress.
[3] The pig feed of [2] wherein the reduction of a cold stress and/or a heat stress represents a prevention and/or an improvement of a reduction of pig productivity due to a cold stress and/or a heat stress.
[4] The pig feed of [3] wherein the reduction of pig productivity represents a reduction of a feed efficiency and/or a rate of raising.
[5] A method for breeding a pig which comprises taking the pig feed of [1] to a pig.
[6] A method for preventing and/or improving a reduction of a productivity in a pig due to a cold stress and/or a heat stress which comprises taking the pig feed of [1] to a pig.
[7] A method for increasing a feed efficiency in a pig, which comprises taking the pig feed of [1] to a pig.
[8] The pig feed of [1] for increasing reduced glutathione.

(EFFECT OF INVENTION)

The pig feed of the present invention can reduce a cold stress or a heat stress in a pig, and can prevent and/or improve a reduction in productivity due to a cold stress and/or a heat stress. That is, the pig feed of the present invention can be used to breed a pig as a pig feed which is excellent for improving a weight gain and a feed efficiency in an environment of a cold stress and/or a heat stress.
"Abscisic acid and/or a salt thereof" to be added to a pig feed in accordance with the present invention is preferably (S)-(+)-abscisic acid (hereinafter also referred to as "S-abscisic acid" or "S-ABA"), which is one of enantiomers of abscisic acid, and/or a salt thereof. S-abscisic acid has the following structure.

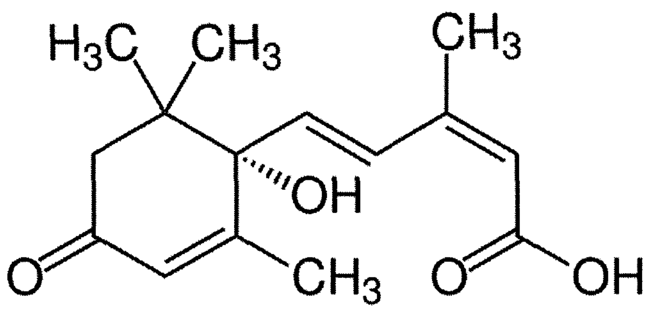

An example of an abscisic acid salt which can be used in the present invention includes an inorganic acid salt, for example, ammonium salts, lithium salts, sodium salts, potassium salts and magnesium salts; and organic acid salts, for example, triethanolamine salts, dimethanolamine salts, and ethanolamine salts. An abscisic acid salt is not limited to these in the present invention and includes any other salts. The preferred salts in the present invention are ammonium salts. Another preferred salts in the present invention are sodium salts and potassium salts. The production of the salt can be carried out in a conventional manner by contacting abscisic acid with a sufficient amount of a desired base. The

salts may be treated with an appropriate dilute acid solution, for example, dilute sulfuric acid, dilute hydrochloric acid or dilute phosphoric acid to regenerate free acids. The free acids are different from their respective acids in some physical properties, for example, solubility in a polar solvent, but any forms can be used in the present invention. An abscisic acid salt which can be used in the present invention may be a pharmaceutically acceptable salt.

A particle size of ABA is preferably 0.03 to 3 mm, and more preferably 0.1 to 1 mm. The particle size of the ABA to be added can be adjusted by a sieve.

Production of abscisic acid per se is not particularly limited and may be performed by conventional methods. For example, a method using Botrytis bacteria (JP 61-35838 A) and a method using Cercospora rosicola [Experimenta 33, 1556 (1977), JP 58-36393 A, JP 56-160996 A] are known.

Bacteria to be used for the production of ABA are not particularly limited as far as they are abscisic acid-producing bacteria belonging to Botrytis or Cercospora, including normal mutated bacteria and bacteria generated by treatment of mutation. Abscisic acid-producing bacteria belonging to Botrytis include Botrytis cinerea FERM P-6156. Mycological properties of Botrytis cinerea having abscisic acid-producing ability have been studied in JP 61-35838 A.

As a culture medium used for abscisic acid production, a solid or liquid medium is used. This medium contains carbon sources such as bran, wheat, rice, sweet potato, potato, glucose, maltose, malt extract, sucrose, dextrin, waste sugar-free, starch and the like, and nitrogen sources such as defatted soy flour, soy flour, gluten, yeast extract, peptone , meat extract, corn steep liquor and the like, each alone or in combination of two or more thereof. In addition, inorganic substances such as magnesium salt, potassium salt, sodium salt, phosphate and the like, vitamins, fats and oils, and others can be added.

The culture medium thus obtained is subjected to a sterilization treatment by a conventional method to give a substantially sterile medium, followed by inoculation with a fungus. Sterilized water containing a spore part of abscisic acid-producing bacteria belonging to the genus Botrytis is used for the medium to which the sterilization has been applied and the spores are uniformly dispersed in the medium so as to inoculate the seed spores. In this case, of course, the medium may be contaminated with mycelial parts other than spores. By inoculating and cultivating seed spores, more uniform cultivation can be carried out and abscisic acid can be accumulated at a high concentration at a high speed.

The culture conditions are as follows: the culture temperature is usually 10 to 40°C, preferably 20 to 30°C; the pH of the medium is usually 3 to 12, preferably 4 to 8; the culture period is usually 1 to 30 days, preferably 5 to 15 days. Cultivation is performed using a culture system excluding contamination of germs. It is particularly preferable to carry out aeration-agitation culture. Abscisic acid is also produced in stationary culture, but its production is markedly promoted by aeration stirring culture.

After completion of the cultivation, ordinary methods can be adopted for isolating abscisic acid from the medium, for example, the method described below is used. First, bacterial cells are removed from the medium by centrifugation, the supernatant is adsorbed on activated carbon, and eluted with an organic solvent. As the elution solvent in this case, for example, a solvent such as acetone, methanol, ethanol or the like is used. Abscisic acid transferred into the eluate can be isolated and purified from the mixture after cultivation by applying general purification methods such as ordinary fractionation extraction, adsorption, partitioning, thin layer chromatography, distillation and the like and ordinary purification methods for organic compound.

A pig feed containing abscisic acid of the present invention can be prepared by mixing a commonly used pig feed with a predetermined amount of abscisic acid and/or its salts. The additives for a pig feed which comprises abscisic acid and/or its salts may be added to a commonly used pig feed. Though an administration of the pig feed containing abscisic acid of the present invention isn't particularly limited, it is convenient and preferable to dose to pig by mixing a predetermined amount of abscisic acid and/or its salt with the pig feed. The pig feed containing abscisic acid of the present invention can be used to a feed for female pig giving a birth to offspring pigs (breeding pig), and preferably can be used as a feed for newborn pigs.

An amount of abscisic acid and/or its salts to be mixed is in a range of from 0.1 to 10 ppm, preferably from 0.5 to 5 ppm, more preferably from 0.5 to 2 ppm, and still more preferably from 1 to 2 ppm.

The pig feed containing abscisic acid of the present invention can be prepared by mixing a commonly-used pig feed with abscisic acid and/or its salts. A pig feed used herein is not particularly limited and may be the one which includes at least one of the followings: cereals such as ethiopian oat, foxtail millet, barnyardgrass, wheat (extruded), rice (extruded), soybean (extruded), corn (extruded), pea, oat, barley, sweetened heat processing soybean, sweet potato, roasted soybean flour, millet, cassava, cassava meal, grain sorghum (milo), brown rice, sesame, wheat, wheat flour, finger millet, lowest grade flour, sudan grass, littel millet, polished rice, buckwheat, fava bean, soybean, dehulled lupine, teosint, dextrin, pearl millet, corn, cornstarch, velvet bean, naked barley, potato starch, bread crumb, Japanese millet, chick pea, soybean (dry heat), de hulled soybean (dry heat), rice hull, sorghum, rye and lupine; bran such as millet bran, barley shochu distillers residue, barley distillers grain, barley distillers grain with soluble, barley distillers soluble, guar meal, citric acid fermentation by-product, glutamic acid fermentation by-product, dehulled rice disitillers grain, dehulled rice disitillers grain with soluble, wheat, dehulled rice disitillers grain, wheat distillers grain, wheat disaster grain with soluble, wheat, corn distillers grain with soluble, rice shochu distillers residue, rice bran, rice germ, corn gluten feed,

sake cake, shochu cake, soy sauce cake, wheat screening pellets, polished rice · wheat distillers grain, polished rice - wheat · brown sugar solution distillers grain, polished rice distillers grain with soluble, soybean hull, beet sugar solution · wheat distillers grain, beet sugar solution distillers grain, sweet potato · pulp, cassava pulp, potato - pulp, molasses distillers solubles, corn • barley distillers grain, corn · barley distillers grain with soluble, corn - barley distillers soluble, corn distillers grain, corn distillers grain with soluble, corn distillers soluble, malt sprout, brewers grain, wheat bran, wheat bran (exploded), hominy feed, barley bran with hull, barley bran with hull and polish, barley bran with polish, naked barley bran with hull and polish, and lysine fermentation by-product; vegetable oil cakes such as oil coconut sky bunch extract, linseed meal, soybean meal (extruded), dehulled soybean meal (extruded), rapeseed meal (extruded), pea protein, soybean meal (steamed and cooked), dehulled soybean meal (extruded and browned with corn syrup), rapeseed meal (browned with corn syrup), soybean meal (browned with corn syrup), kapok seed meal, soybean meal (bean refuse, press extracted), sesame meal, wheat gluten, wheat gluten (degraded with enzyme), corn gluten meal, corn germ meal, sunflower meal, dehulled sunflower meal, soybean meal, dehulled soybean meal, soybean germ meal, soybean whey, rapeseed meal, rice protein concentrate, soybean protein concentrate, dehulled soybean meal (fermented), dehulled soybean meal (degraded with enzyme), potato protein, palm kernel meal, sunflower meal, isolated soybean protein, dehulled soybean meal (exploded), cottonseed meal, copra meal, and groundnut meal ; animal feeds such as shrimp meal, krill meal, poultry by-product meal, whole chicken meal, casein, crab meal, dried pupa, dried whey, fish meal, white fish meal, egg powder, plasma protein concentrate, blood meal, fish protein (degraded with enzyme),dried swine intestine (degraded with enzyme), pupa meal, gelatin, whole egg (degraded with enzyme), dried skim milk, porcine meat and bone meal, whey protein concentrate, fish soluble, fish soluble adsorbed feed, feather meal, and swine blood protein (hydrolyzed); and other feeds such as flax stem, linseed oil calcium soap, starch syrup waste, alfalfa, alfalfa meal, sainfoin, L-lactic acid, L-lysine hydrochloride, spring vetch, cacao husks, confectionery waste, confectionery bread waste, fructose, turnips, sugar cane top, mushroom bed meal (dry), cassava stem and leaf meal, bermudagrass, fish oil ester, leucaena stem and leaf meal, kudzu, grass pea, glutamic acid by-product, clover, chlorella, mulberry leaf meal, Chinese vetch, yeast extract, coconut milk residue, coffee extract residue, corn cob meal, corn steep liquor, devils tongue flour refuse, sugar, silkworm manure, diureido isobutane, fatty acid calcium, Shea nut meal, food by-product, vegetable oil saponified product, vegetable oil gum, vegetable cooking oil, torula yeast (nucleic acid extracted), torula yeast, bread yeast, brewer's yeast, refined fish meal, noodle waste, soybean germ, soybean oil cake, purple crown vetch, medium chain fatty acid calcium salt, tempura scrap meal, corn germ, DL-methionine, beet sugar stem and leave, beet sugar refinery by-product, soybean milk residue, soybean curd residue, animal fat, molasses, trehalose, rapeseed oil cake, hairy vetch, black locust leaf meal, soy sauce cake and tofu cake (lactic fermented), lactose, urea, tropical kudzu, pineapple bran, bagasse, pasta waste, soybean curd residue (fermented), beet meal, beet pulp, fescue (Festuca), winery waste, glucose, bluegrass, bromegrass (Bromus), mangel beet, orange peelings, orange juice pulp, trefoil, sericea lespedoza, cottonseed, cottonseed hull, kraft pulp, rice hull, wild cabbage, L-lysine sulfate, apple juice pulp, rutabaga, lupine hull, which may be appropriately used in admixture. The pig feed for use in the present invention preferably contains at least one selected from the group consisting of corn, wheat, milo, oat, barley, soybean, soybean oil cake, rapeseed oil cake, corn distiller's grain solubles, corn gluten feed, bran and rice bran.

The pig feed containing abscisic acid of the present invention may further contain vitamins, minerals, guanidinoacetic acid, pigments and the like.

The vitamins include L-ascorbic acid, calcium L-ascorbate, sodium L-ascorbate, L-ascorbic acid-2-phosphoestermagnesium, acetomenaphthone, inositol, dibenzoyl thiamine hydrochloride, ergocalciferol, choline chloride, thiamine hydrochloride, pyridoxine hydrochloride, β-Carotene, cholecalciferol, DL-α-Tocopherol Acetate, retinyl acetate, cyanocobalamin, thiamine mononitrate, nicotinic acid, nicotinamide, p-Aminobenzoic Acid, retinyl palmitate, calcium D-pantothenate, calcium DL-pantothenate, d-biotin, vitamin A Powder, vitamin A Oil, vitamin D Powder, vitamin D3 Oil, vitamin E Powder, 25-hydroxycholecalciferol, retinyl propionate, menadione dimethylpyrimidinol bisulfite, menadione sodium bisulfite, folic acid, riboflavin, riboflavin tetrabutyrate, and the like.

The minerals include zinc chloride, potassium chloride, ferric chloride, copper chloride, copper oxychloride, ferric citrate, ferric ammonium citrate, calcium gluconate, iron and sodium succinate citrate, zinc acetate, cobalt acetate, copper acetate, zinc oxide, copper oxide, magnesium oxide, aluminum hydroxide, manganese hydroxide, selenium, zinc carbonate, cobaltous carbonate, sodium bicarbonate, ferrous carbonate, magnesium carbonate, manganese carbonate, Zn bis(2-hydroxy-4-metylthio butyrate), ferrous DL-threonate, calcium lactate, ferrous fumarate, zinc peptide, iron peptide, copper peptide, manganese peptide, molybdenum, potassium iodide, potassium iodate, calcium Iodate, zinc sulfate, zinc methionine sulfate, sodium sulfate, magnesium sulfate, cobaltous sulfate, ferrous sulfate, copper sulfate, magnesium sulfate, lysine copper complex, potassium hydrogen phosphate, sodium hydrogen phosphate, tricalcium phosphate, potassium dihydrogen phosphate, sodium dihydrogen sulfate, and the like.

The pigments include astaxanthin, β-apo-8'-carotene acid ethyl ester, capsanthin, carbon black, canthaxanthin, citranaxantin, zeaxanthin, lutein, and the like.

The pig feed containing abscisic acid of the present invention may further contain a flavoring agent, a taste imparting agent, an enzyme, a viable bacteria agent, an organic acid, and the like.

The flavoring agent includes esters, ethers, ketones, fatty acids, aliphatic higher alcohols, aliphatic higher aldehydes, aliphatic higher hydrocarbons, terpene hydrocarbons, phenol ethers, phenols, aromatic alcohols, aromatic aldehydes, lactones, and the like.

The taste imparting agent includes saccharin sodium, and the like.

The enzyme includes amylase, alkaline Protease, galactosidase, xylanase, xylanase and pectinase complex, β-glucanase, acid protease, cellulase, cellulase, protease and pectinase complex, neutral protease, phytase, mannanase, lactase, lipase, and the like.

The viable bacteria agent includes Enterococcus faecium, Clostridium butyricum, Saccharomyces cerevisiae, Bacillus amyloliquefaciens, Bacillus coagulans, Bacillus subtilis, Bacillus cereus, Bacillus badius, Bacillus licheniformis, Bifidobacterium animalis, Bifidobacterium thermophilum, Bifidobacterium pseudolongum, Pediococcus acidilactici, Lactococcus lactis, Lactobacillus acidophilus, Lactobacillus salivarius, Lactobacillus buchneri, Lactobacillus casei, Lactobacillus plantarum, and Lactobacillus rhamnosus, and the like.

The organic acid includes calcium formate, sodium gluconate, potassium diformate, fumaric acid, and the like.

The pig feed containing abscisic acid of the present invention may be used in combination with synthetic antibacterial agents and antibiotics.

The synthetic antibacterial agents include amprolium plus ethopabate, amprolium plus ethopabate and sulfaquinoxaline, robenidine hydrochloride, morantel citrate, diclazuril, decoquinate, nicarbazin, halofuginone hydrobromide, calcium halofuginone polystyrenesulfonate, and the like.

The antibiotics include Zinc Bacitracin, avilamycin, alkyltrimethylammonium calcium oxytetracycline, enramycin, chlortetracycline, salinomycin sodium, semduramicin sodium, narasin, nosiheptide, bicozamycin, flavophospholipol, maduramycin ammonium, monensin sodium, lasalocid sodium, tylosin phosphate, and the like.

The pig feed containing abscisic acid of the present invention may further contain an antioxidant, a binder, an emulsifier, a regulator, etc. in order to prevent deterioration of feed quality.

The antioxidant includes ascorbic acid, sodium ascorbate, calcium ascorbate, α-tocopherol, ethoxyquin, dibutylhydroxy-toluene, ascorbyl palmitate, butylhydroxyanisol, and the like.

The binder includes sodium alginate, sodium caseinate, sodium carboxylmethyl cellulose, propylene glycol, sodium polyacrylate, and the like.

The emulsifier includes glycerin fatty acid ester, sucrose fatty acid ester, sorbitan fatty acid ester, polyoxyethylene sorbitan fatty acid ester, polyoxyethylene glycerol fatty acid ester, and the like.

The regulator includes formic acid, and the like.

In addition to the above, the pig feed containing abscisic acid of the present invention may be used in admixture or in combination with herbs such as, for example, sweet flag (Acorus calamus), garlic (Allium sativum), dill (Anethum graveolens), wormwood (Artemisia absinthium), caraway(Carum carvi), Cinnamomum (Cinnamomum), coriander (Coriandrum sativum), cumin (Cuminum cyminum), turmeric (Curcuma longa), lemon grass (Cymbopogon citratus), artichoke (Cynara scolymus), Echinacea (Echinacea), cardamon (Elettaria cardamomum), fennel (Foeniculum vulgare), ginkgo (Ginkgo biloba), licorice (Glycyrrhiza glabra), common Saint John's wort (Hypericum perforatum), bay laurel (Laurus nobilis), lovage (Levisticum officinale), tea tree (Melaleuca alternifolia), lemon balm (Melissa officinalis), spearmint (Mentha spicata), peppermint (Mentha × piperita), nutmeg (Myristica fragrans), basil (Ocimum basilicum), marjoram (Origanum majorana), oregano (Origanum vulgare), chinese ginseng (Panax ginseng), parsley (Petroselinum sativum), allspice (Pimenta dioica), anise (Pimpinella anisum), pepper (Piper nigrum), patchouli (Pogostemon cablin), rosemary (Rosmarinus officinalis), sage (Salvia officinalis), sweetleaf (Stevia rebaudiana), clove (Syzygium aromaticum), Tansy (Tanacetum vulgare), dandelion (Taraxacum officinale), thyme (Thymus), ajwain (Trachyspermum ammi), ginger (Zingiber officinale), and the like, each alone in combination thereof. Among the herbs mentioned above, sweet flag (Acorus calamus), garlic (Allium sativum), wormwood (Artemisia absinthium), Cinnamomum (Cinnamomum), Echinacea (Echinacea), oregano (Origanum vulgare), clove (Syzygium aromaticum) and thyme (Thymus) are preferably used. The above-mentioned herbs, not only in the form of powders, can be extracted and used in the form of essential oil.

The pig feed containing abscisic acid of the present invention can be used as a feed for meat pig, and can be used as a feed for newborn pig, which can improve a weight gain. In particular, the pig feed containing abscisic acid of the present invention can reduce a cold stress and/or a heat stress when it is used in an environment of a cold stress and/or a heat stress. Specifically, it can prevent and/or improve a reduction in a pig productivity due to a cold stress and/or a heat stress, and also can improve a weight gain of young pigs, and prevent and/or improve the reduction in a feed efficiency and/or a rate of raising. The timing for giving a feed to young pigs is the period after weaning until it is shipped as a meat pig. It is particularly preferable to provide the pig feed containing abscisic acid of the present invention to the offspring pig at least during the weaning period (about 21 to 70 days old) .

The pig feed containing abscisic acid of the present invention can be also used as a feed for female pig giving a birth to offspring pigs (such as breeding pigs), and can improve a weight gain of the female pig, and improve the productivity of breeding together with the improvement of feed efficiency. In particular, the pig feed containing abscisic acid of the present invention can reduce a cold stress and/or a heat stress when it is used in an environmental of a cold

stress and/or a heat stress. Specifically, it can prevent and/or improve a reduction in a pig productivity due to a cold stress and/or a heat stress, and also prevent and/or improve a reduction in a feed efficiency and/or a rate of raising. The pig feed containing abscisic acid of the present application can be used as a feed for a female pig (such as a breeding pig) during any periods of breast-feeding period, post-weaning mating period, pregnancy period, and delivery period.

The pig feed containing abscisic acid of the present invention can be given to a pig to increase an amount of reduced glutathione in the body of a pig. It is known that the reduced glutathione captures activated oxygen, that is, has an antioxidant property. The increasing of the reduced glutathione contained in a pig body means that the accumulation of activated oxygen is suppressed and the antioxidant potency of a pig is improved, that is, a pig is healthy.

As used herein, "daily body weight gain" is a unit which shows a growth rate (an increased amount of body weight) of livestock and is generally indicated as kg/day. It is also called as an average weight gain per day or daily weight gain.

As used herein, "feed conversion ratio (FCR)" means an intake (or consumption) of feed necessary for the production of 1 kg of livestock product and is an inverse of feed efficiency, indicated by the following formula:

Feed conversion rate = [Feed intake (or Feed consumption) (kg) / Amount of livestock product (kg)]

On the other hand, as used herein, "feed efficiency" means "Amount of livestock product (kg) / Feed intake (or Feed consumption) (kg)". The "amount of livestock product" is the weight gained during the raising period, and is also referred to as "body weight gain".

As used herein, "weaning rate" means that "Number of pigs weaned" / "Number of suckling piglets".

As used herein, "cold stress" means a stress due to a low temperature. The low temperature means a temperature lower than room temperature, usually lower than optimal temperature for raising pigs (such as 26°C), for example, a temperature of 22°C or lower, 20°C or lower, or 15°C or lower.

As used herein, "heat stress" means a stress due to a high temperature. The high temperature means a temperature higher than room temperature, usually higher than optimal temperature for raising pigs (such as 26°C), for example, a temperature of 30°C or higher, or 35°C or higher.

EXAMPLES

The present invention is explained in more detail with the following examples but is not limited thereto.

Test Example 1

The effect of abscisic acid on reducing productivity decrease due to cold stress

(1) Materials and Methods

Eighty four (84) crossbred young pigs (LWD) at an age of 28 days were employed in this test. Body weight of the each young pigs was measured and seven animals were assigned to one section considering the average body weight across the sections was equal, and the three sections (replicates) were assigned to a total four test groups. The test period was from 28 to 70 day-old, and S-abscisic acid was (hereinafter, referred to as "S-ABA") used as a test substance. The S-ABA was added to the feed at the concentrations shown in Table 1, and the feed containing S-ABA was fed daily to the pigs at the age of 28 to 70 days. The low temperature environment was carried out from the age of 36 to 70 days of the pigs.

(2) Testing Groups

The following four groups were set. Three sections (replicates) per one group was set and the test condition is shown in Table 1 below.

[Table 1]

| Test Group | Addition concentration of S-ABA (ppm) | Raising Environment | Replicates | Number of Pigs / Replicates | Total Number of Pigs |
|---|---|---|---|---|---|
| 1 | 0 | Optimal Temperature | 3 | 7 | 21 |
| 2 | 0.1 | Low Temperature | 3 | 7 | 21 |
| 3 | 0.5 | Low Temperature | 3 | 7 | 21 |
| 4 | 1 | Low Temperature | 3 | 7 | 21 |

(3) Housing

The pigs were raised at the optimal temperature from the age of 28 to 35 day-old. After the age of 36 days, the pigs of the Test group 1 were housed at an optimal temperature and the pigs of the Test groups 2 to 4 were exposed to a particular low temperature by air conditioner. The raising temperature were measured with a thermo-hygrometer or a data logger which was installed near the center of the raising room, and then recorded. The average room temperature of the optimal temperature group was 26.1 °C, and the average room temperature of the low temperature group was 20.4 °C.

As a feed, an early feed, middle feed or late feed of MAMACOLO which was manufactured by FEED ONE CO., LTD. (2-6, Higashifukasiba Kamisu-shi, Ibaraki) was given by ad libitum feeding. Feed ingredients are shown in Table 2. A drinking water was freely ingested by a waterer with a picker. The early feed was given until the age of 35 days of the pig, the middle feed was given at the age of from 36 days to 42 days, and the late feed was given at the age of post 43 days.

[Table 2]

| Ingredients | MAMACOLO EARLY | MAMACOLO MIDDLE | MAMACOLO LATE |
|---|---|---|---|
| Crude Protein | 21.5 % or higher | 20.5 % or higher | 19.0 % or higher |
| Crude Fat | 4.0 % or higher | 3.0 % or higher | 3.0 % or higher |
| Crude fiber | 2.0 % or higher | 3.0 % or higher | 3.5 % or higher |
| Crude Ash | 8.5 % or higher | 8.5 % or higher | 7.0 % or higher |
| Calcium | 0.70 % or higher | 0.70 % or higher | 0.60 % or higher |
| Phosphorus | 0.60 % or higher | 0.60 % or higher | 0.50 % or higher |
| Total Amounts of Digestible Nutrients | 87.0 % or higher | 84.0 % or higher | 81.0 % or higher |

(4) Monitoring and parameters to be measured

(i) Clinical symptoms: observed daily.
(ii) Body weight: Body weight was measured for each individual at the age of 28, 35 and 70 days old, and the average weight gain per a section from the age of 35 to 70 days during the test period was calculated.
(iii) Feed intake: Feed intake was measured daily for each section, and feed intake for one animal per a week was calculated. Also, feed conversion rate (feed intake / body weight gain) was calculated from "Average feed intake" and "Average body weight gain per section" during the test period.

It was studied whether the reduction in productivity due to cold stress could be decreased by adding of abscisic acid (ABA) to the feed at the concentrations of 0.1, 0.5 or 1 ppm. The results were shown in Tables 3 to 5 below.

(Clinical symptoms)

No abnormality was seen in all individuals.

(Body weight gain)

As shown in Table 3, the low temperature groups with ABA showed an increase of body weight gain in spite of an exposure to low temperature environment compared to the optimal temperature group, and it was also confirmed the effect of ABA on reducing cold stress (a reduction in body weight gain).

[Table 3]

| Raising Environment | Addition Concentration of ABA (ppm) | Body Weight Gain (kg, Average value) |
|---|---|---|
| Optimal Temperature | 0 | 15.25 |
| Low Temperature | 0.1 | 16.99 |
| | 0.5 | 16.40 |
| | 1.0 | 17.00 |

(Feed Intake)

As shown in Table 4, the low temperature group with ABA showed an increase of feed intake compared to the optimal temperature group, and it was also confirmed the effect of ABA on reducing cold stress (a reduction in feed intake).

[Table 4]

| Raising Environment | Addition Concentration of ABA (ppm) | Feed Intake (kg, Average value) |
|---|---|---|
| Optimal Temperature | 0 | 28.80 |
| Low Temperature | 0.1 | 29.81 |
| | 0.5 | 29.91 |
| | 1.0 | 30.30 |

(Feed Conversion Rate)

As shown in Table 5, the low temperature groups with ABA showed a lower value of feed conversion rate in spite of an exposure to low temperature environment compared to the optimal temperature group, and it was also confirmed the effect of ABA on reducing cold stress (a reduction in feed conversion rate).

[Table 5]

| Raising Environment | Addition Concentration of ABA (ppm) | Feed Conversion Rate (Feed Intake / Body Weight Gain, Average value) |
|---|---|---|
| Optimal Temperature | 0 | 4.45 |
| Low Temperature | 0.1 | 4.40 |
| | 0.5 | 4.29 |
| | 1.0 | 4.41 |

Test Example 2

The effect of abscisic acid on reducing productivity decrease due to heat stress

(1) Materials and Methods

Eighty four (84) of crossbred young pigs (LWD) at an age of 28 days were employed in this test. Body weight of the each young pigs was measured and seven animals were assigned to one section considering the average body weight across the sections was equal, and the three sections (replicates) were assigned to a total four test groups. The test period was from 28 to 70 day-old, and S-abscisic acid was used as a test substance. The S-ABA was added to the feed at the concentrations shown in the Table 6, and the feed containing S-ABA was fed daily to the pigs at the age of 28 to 70 days. The high temperature environment was carried out from the age of 36 to 70 days of the pigs.

(2) Testing Groups

The following four groups were set. Three sections (repetitions) per one group was set, which were assigned to each test group as indicated in the below Table.

[Table 6]

| Test Group | Addition concentration of S-ABA (ppm) | Raising Environment | Replicates | Number of Pigs / Replicates | Total Number of Pigs |
|---|---|---|---|---|---|
| 1 | 0 | Optimal Temperature | 3 | 7 | 21 |
| 2 | 0.1 | High Temperature | 3 | 7 | 21 |
| 3 | 0.5 | High Temperature | 3 | 7 | 21 |
| 4 | 1 | High Temperature | 3 | 7 | 21 |

(3) Housing

The pigs were raised at the optimal temperature from the age of 28 to 35 day-old. After the age of 36 days the pigs of the Test group 1 were housed at an optimal temperature and the pigs of the Test groups 2 to 4 were exposed to a particular high temperature by air conditioner. The raising temperature were measured with a thermo-hygrometer or a data logger which was installed near the center of the raising room, and then recorded. The average room temperature of the optimal temperature group was 26.1 °C, and the average room temperature of the low temperature group was 30.6 °C.

As a feed, similarly to the test example 1, an early feed, middle feed or late feed of MAMACOLO which was manufactured by FEED ONE CO., LTD. (2-6, Higashifukasiba Kamisu-shi, Ibaraki) was given by ad libitum feeding. Feed ingredients are shown in Table 7. A drinking water was freely ingested by a waterer with a picker. The early feed was given until the age of 35 days of the pig, the middle feed was given at the age of from 36 days to 42 days, and the late feed was given at the age of post 43 days.

[Table 7]

| Ingredients | MAMACOLO EARLY | MAMACOLO MIDDLE | MAMACOLO LATE |
|---|---|---|---|
| Crude Protein | 21.5 % or higher | 20.5 % or higher | 19.0 % or higher |
| Crude Fat | 4.0 % or higher | 3.0 % or higher | 3.0 % or higher |
| Crude fiber | 2.0 % or higher | 3.0 % or higher | 3.5 % or higher |
| Crude Ash | 8.5 % or higher | 8.5 % or higher | 7.0 % or higher |
| Calcium | 0.70 % or higher | 0.70 % or higher | 0.60 % or higher |
| Phosphorus | 0.60 % or higher | 0.60 % or higher | 0.50 % or higher |
| Total Amounts of Digestible Nutrients | 87.0 % or higher | 84.0 % or higher | 81.0 % or higher |

(4) Monitoring and parameters to be measured

(i) Clinical symptoms: observed daily.

(ii) Body weight: Body weight was measured for each individual at the age of 28, 35 and 70 days old, and the average weight gain per a section from the age of 35 to 70 days during the test period was calculated.

(iii) Feed intake: Feed intake was measured daily by each section, and feed intake for one animal per a week was calculated. Also, feed conversion rate (feed intake / body weight gain) was calculated from "Average feed intake" and "Average body weight gain per section" during the test period.

It was studied whether the reduction in productivity due to heat stress could be decreased by adding of abscisic acid (ABA) to the feed at the concentrations of 0.1, 0.5 or 1 ppm. The results were shown in Tables 8 to 10 below.

(Clinical symptoms)

No abnormality was seen in all individuals.

(Body weight gain)

As shown in the Table 8, the high temperature groups with ABA showed an increase of body weight gain in spited of an exposure to high temperature environment compared to the optimal temperature group, and it was also confirmed the effect of ABA on reducing heat stress (a reduction in body weight gain).

[Table 8]

| Raising Environment | Addition Concentration of ABA (ppm) | Body Weight Gain (kg, Average value) |
|---|---|---|
| Optimal Temperature | 0 | 15.60 |
| High Temperature | 0.1 | 18.04 |
| | 0.5 | 18.25 |
| | 1.0 | 19.02 |

(Feed Intake)

As shown in the Table 9, the high temperature group with ABA showed an increase of feed intake compared to the optimal temperature group in spite of an exposure to high temperature environment, and it was also confirmed the effect of ABA on reducing heat stress (a reduction in feed intake).

[Table 9]

| Raising Environment | Addition Concentration of ABA (ppm) | Feed Intake (kg, Average value) |
|---|---|---|
| Optimal Temperature | 0 | 28.7 |
| High Temperature | 0.1 | 30.7 |
| | 0.5 | 29.7 |
| | 1.0 | 32.9 |

(Feed Conversion Rate)

As shown in Table 10, the low temperature group, except the group of 0.1 ppm of ABA, showed a lower value of feed conversion rate compared to the optimal temperature group in spite of an exposure to high temperature environment, and it was also confirmed the effect of ABA on reducing heat stress (a reduction in feed conversion rate).

[Table 10]

| Raising Environment | Addition Concentration of ABA (ppm) | Feed Conversion Rate (Feed Intake / Body Weight Gain, Average value) |
|---|---|---|
| Optimal Temperature | 0 | 4.40 |
| High Temperature | 0.1 | 4.54 |
| | 0.5 | 4.25 |
| | 1.0 | 3.91 |

Test Example 3

The Effect of abscisic acid on increasing a production of reduced glutathione

The effect of administration of S-ABA was examined as follows.

(1) Materials and Methods

Twelve (12) of gilts at an age of 8 months were employed in this test. The S-ABA (particle size of 0.1 to 1 mm) in the amounts as shown in Table 11 was supplemented in the feed for about 40 days from the day of artificial insemination.

[Table 11]

| Test Group | Addition concentration of S-ABA (ppm) |
|---|---|
| 3-1 | 0 |
| 3-2 | 10 |

(2) Monitoring and parameters to be measured

(i) Clinical symptoms: observed daily.
(ii) Sampling of intestinal tracts: The pig was dissected on the 40th day of pregnancy, and the small intestine was sampled.

(Clinical symptoms)

No abnormality was seen in all individuals.

(Reduced glutathione in small intestine mucosa and cells)

The measurement results of reduced glutathione in a small intestine after the administration for about 40 days are shown in Table 12. Using a commercially available glutathione measuring kit (manufactured by DOJINDO CHEMICALS Inc.; GSSH/GSH Quantification Kit), the reduced glutathione contained in 1g of small intestine tissue was determined quantitatively. The result of 10 ppm S-ABA group (No. 3-2) increased amount of reduced glutathione in small intestine tissue significantly compared to the no dosing S-ABA group (No. 3-1).

[Table 12]

| Test Group | Reduced glutathione Amount ($\mu$mol/g wet tissue) |
|---|---|
| 3-1 | 0.137 |
| 3-2 | 0.234 |

INDUSTRIAL APPLICABILITY

The pig feed containing abscisic acid of the present invention is a product wherein abscisic acid and/or its salts are added to a pig feed, which can be used as a pig feed having excellent effect on body weight gain and feed efficiency in order to raise a pig. The pig feed containing abscisic acid of the present invention can increase a productivity of a pig by using it as a pig feed, which can decrease a cold stress or a heat stress, prevent and/or improve a reduction in the productivity due to cold stress and/or heat stress, and prevent and/or improve a reduction in feed efficiency and/or rate of raising. Also the pig feed containing abscisic acid of the present invention can increase a reduced glutathione in the body of a pig when it dosed to a pig, which can improve an antioxidant potency of the pig.

## Claims

1. A pig feed comprising 0.1 to 10 ppm of abscisic acid and/or a salt thereof in the feed.

2. The pig feed according to claim 1 which is for a reduction of a cold stress and/or a heat stress.

3. The pig feed according to claim 2 wherein the reduction of a cold stress and/or a heat stress represents a prevention and/or an improvement of a reduction of pig productivity due to a cold stress and/or a heat stress.

4. The pig feed according to claim 3 wherein the reduction of pig productivity represents a reduction of a feed efficiency and/or a rate of raising.

5. A method for breeding a pig which comprises taking the pig feed according to claim 1 to a pig.

6. A method for preventing and/or improving a reduction of a productivity in a pig due to a cold stress and/or a heat stress which comprises taking the pig feed according to claim 1 to a pig.

7. A method for increasing a feed efficiency in a pig, which comprises taking the pig feed according to claim 1 to a pig.

8. The pig feed according to claim 1 for increasing reduced glutathione.

## INTERNATIONAL SEARCH REPORT

International application No.
**PCT/JP2021/046242**

### A. CLASSIFICATION OF SUBJECT MATTER

***A23K 20/184***(2016.01)i; ***A23K 50/30***(2016.01)i
FI: A23K20/184; A23K50/30

According to International Patent Classification (IPC) or to both national classification and IPC

### B. FIELDS SEARCHED

Minimum documentation searched (classification system followed by classification symbols)

A23K20/184; A23K50/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus (JDreamIII); JMEDPlus (JDreamIII); JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X<br><br>A | JP 2002-45122 A (AJINOMOTO CO., INC.) 12 February 2002 (2002-02-12)<br>paragraphs [0010]-[0016]<br>entire text | 1, 5, 7<br><br>2-4, 6, 8 |
| A | 岩波生物学辞典. 第 3 版,第 2 刷. Iwanami Shoten, Publishers, 20 April 1984, p. 19, non-official translation (Iwanami Dictionary of Biology. Third Edition, Second Printing.)<br>Abscisic Acid | 1-8 |
| A | JP 2013-542925 A (BAYER BIOSCIENCE GMBH) 28 November 2013 (2013-11-28)<br>entire text | 1-8 |
| A | JP 2008-536507 A (DE-SOL B.V.) 11 September 2008 (2008-09-11)<br>entire text, all drawings | 1-8 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2021/046242**

| Patent document cited in search report | Publication date (day/month/year) | Patent family member(s) | Publication date (day/month/year) |
|---|---|---|---|
| JP 2002-45122 A | 12 February 2002 | US 2002/0004096 A1<br>paragraphs [0018]-[0031]<br>EP 1157616 A1<br>BR 102134 A<br>AU 4805201 A<br>TW 240616 B<br>CN 1325633 A<br>KR 20010107772 A<br>MX PA01005352 A<br>DK 1157616 T3<br>CA 2348836 A1 | |
| JP 2013-542925 A | 28 November 2013 | US 2012/0071556 A1<br>WO 2012/037562 A2<br>entire text<br>EP 2616059 A2<br>CA 2809641 A1<br>CN 103179965 A<br>MX 2013002948 A<br>DK 2616059 T3 | |
| JP 2008-536507 A | 11 September 2008 | US 2008/0242635 A1<br>WO 2006/125699 A1<br>entire text, all drawings<br>EP 1714673 A1<br>CA 2604771 A1<br>CN 101163520 A<br>EA 200702288 A1<br>HK 1116362 A1<br>DK 1871481 T3<br>ES 2554502 T3<br>PL 1871481 T3 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020208576 A
- US 3958025 A
- US 7741367 B
- US 7718699 B
- WO 2012037561 A
- US 9591867 B
- US 20150250209 A
- US 10238613 B
- US 20200030269 A
- JP 61035838 A
- JP 58036393 A
- JP 56160996 A


### Non-patent literature cited in the description


- *The Japanese journal of swine science,* September 2012, vol. 49 (3), 109-116
- *The Japanese journal of swine science,* March 2012, vol. 49 (1), 1-13
- **PYDI et al.** *Biochemistry,* 2015, vol. 54, 2622-2631
- **HOU et al.** *The Journal of Biological Chemistry,* 2016, vol. 291, 27007-27022
- *Experimenta,* 1977, vol. 33, 1556